# EUROPEAN PATENT SPECIFICATION

(11) **EP 1 312 867 B1**
(45) Date of publication and mention of the grant of the patent: **25.03.2009**
(21) Application number: 02257963.5
(22) Date of filing: 19.11.2002
(51) Int. Cl.: F24C 3/04, F24C 3/08, F24C 3/12, F24C 15/10, F24C 15/00

(54) **Gas heater**
Gas-Heizgerät
Elément chauffant de gas

(30) Priority: 19.11.2001 JP 2001353020
(43) Date of publication of application: 21.05.2003
(73) Proprietor: RINNAI KABUSHIKI KAISHA, Nagoya-shi, Aichi-ken (JP)
(72) Inventor: Sobue, Tsutomu c/o Rinnai Kabushiki Kaisha, Nakagawa-ku, Nagoya-shi Aichi-ken (JP); Yano, Koji c/o Rinnai Kabushiki Kaisha, Nakagawa-ku, Nagoya-shi Aichi-ken (JP); Yamada, Yutaka c/o Tokyo Gas Kabushiki Kaisha, Minato-ku Tokyo (JP)
(74) Representative: Fenlon, Christine Lesley

(56) References cited:
- EP-A- 0 601 270
- DE-A1- 3 918 722
- US-A- 3 843 313
- US-A- 4 083 355
- US-A1- 2001 010 897

## Description

### BACKGROUND OF THE INVENTION

The present invention relates to a gas heater for heating an object placed on an upper panel above a combustion chamber without exposing flames.

### Description of the Related Art:

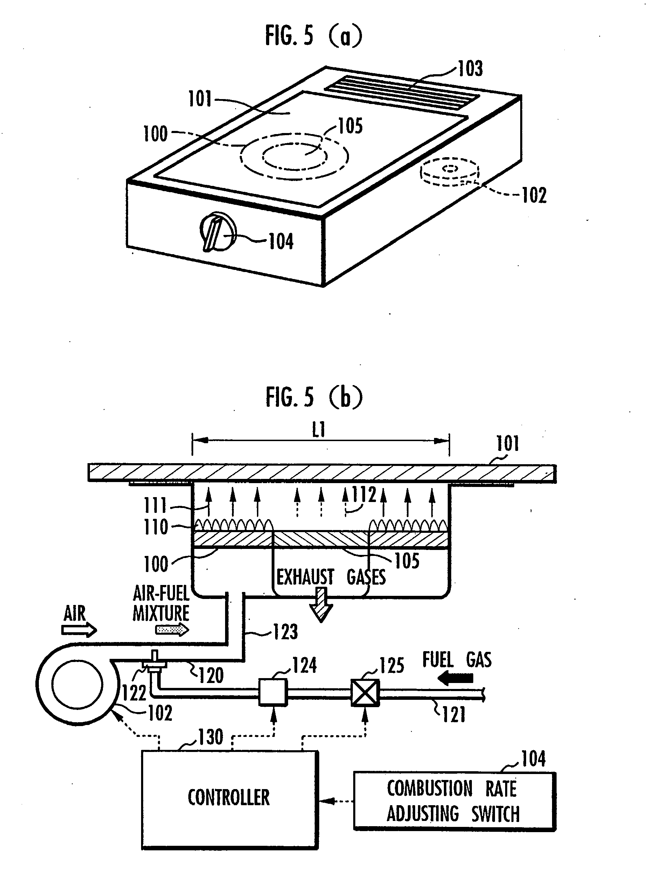

FIG. 5(a) of the accompanying drawings shows a previously considered gas heater having a combustion chamber which houses a burner 100 therein and a heat-resistant upper panel 101 of glass disposed above the combustion chamber. The gas heater heats an object that is placed on the upper panel 101 without exposing flames. An air supply/discharge fan 102 supplies combustion air to the burner 100, and a combustion gas from the burner 100 is discharged from an exhaust slot 103.

FIG. 5(b) of the accompanying drawings shows the previously considered gas heater in vertical cross section with some parts being illustrated in block form. As shown in FIG. 5(b), a controller 130 controls a gas proportional valve 124 to control the flow rate of a fuel gas that is supplied from a gas supply passage 121 through a nozzle 122 to a mixture pipe 123, according to a target combustion rate which is set for the burner 100 by a combustion rate adjusting switch 104 that adjusts the combustion rate of the burner 100. The controller 130 also controls the air supply/discharge fan 102 to control the flow rate of combustion air supplied to the mixture pipe 123.

The gas supply passage 121 has a main gas valve 125 at its end connected to the mixture pipe 123. A porous body 105 is disposed in a combustion gas exhaust passage defined in the burner 100. When the porous body 105 is heated by the heat of the combustion gas, the porous body 105 becomes red hot. When the burner 100 is in operation, it generates heat 111 from its surface due to combustion flames 110 that are produced by the combustion of the fuel gas, and the porous body 105 also generates radiant heat 112 as it becomes red hot. Therefore, the gas burner has a high thermal efficiency.

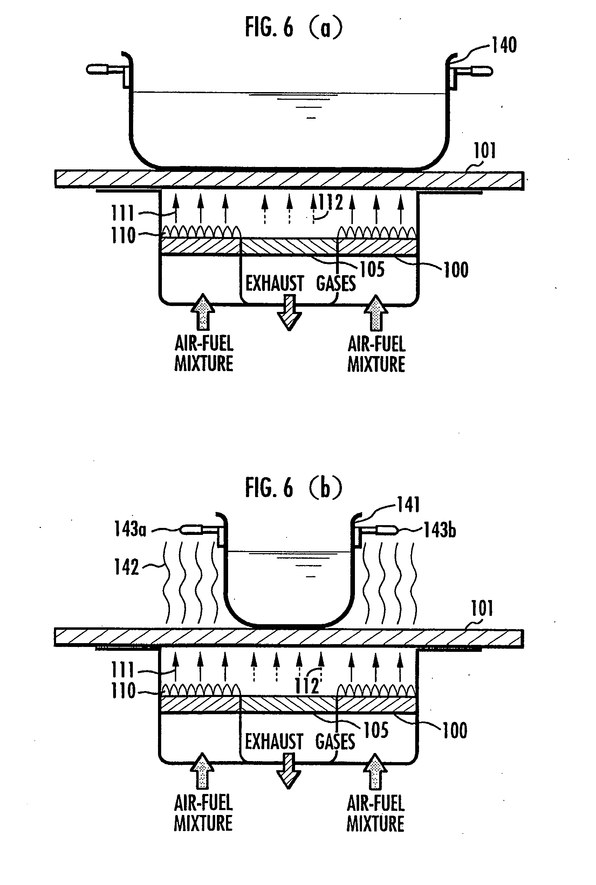

As shown in FIG. 6(a) of the accompanying drawings, when a pan 140 having a bottom area greater than the effective heating area (within a circle having a diameter L1, see FIG. 5(b)) of the upper panel 101 is heated by the gas heater, the pan 140 can efficiently be heated by heat energy radiated from the burner 100 and the porous body 105.

However, as shown in FIG. 6(b) of the accompanying drawings, when a pan 141 having a bottom area smaller than the effective heating area of the upper panel 101 is heated by the gas heater, heat 142 is radiated into a space around the pan 141. At this time, the heat is partly radiated wastefully, lowering the thermal efficiency of the gas heater, and the heat energy radiated into the space around the pan 141 tends to make the cooker uncomfortable and heat handles 143a, 143b of the pan 141 to the extent that the cooker finds it hard to hold the handles 143a, 143b.

US-A-4083355 discloses a gas range having one or more burners. EP0601270A1 discloses a gas range with porous burner components.

The present invention is concerned with an improvement over a gas heater having a combustion chamber with an upper panel disposed thereabove for placing an object to be heated thereon, a surface-combustion burner disposed in the combustion chamber in confronting relation to the upper panel, a fuel gas supply means for supplying a fuel gas to the burner, an exhaust passage having an end communicating with the combustion chamber through an air-permeable porous body disposed in the combustion chamber and an opposite end communicating with an exhaust slot, and an air supply/discharge fan for supplying combustion air to the burner and delivering combustion exhaust gases from the burner through the porous body and the exhaust passage to the exhaust slot, said burner comprising a plurality of endless burner blocks of different sizes disposed around said porous body, said sizes of the endless burner blocks being progressively smaller toward said porous body , said burner further comprising burner block combustion switching means for selectively activating and inactivating a combustion of the fuel gas individually on said burner blocks; and further effective heating area changing means for increasing an effective heating area on said upper panel by progressively increasing the number of burner blocks to combust the fuel gas thereon outwardly from an innermost one of the burner blocks, and reducing the effective heating area on said upper panel by progressively reducing the number of burner blocks to combust the fuel gas thereon inwardly toward the innermost one of the burner blocks, wherein said burner block combustion switching means comprises means for combusting the fuel gas on only selected ones of said burner blocks, and supplying only combustion air and stopping supplying the fuel gas to the other burner blocks on which the combustion of the fuel gas is inactivated that are disposed outwardly of said selected ones of the burner blocks, thereby to cool the other burner blocks and nearby regions thereof.

When the burner block combustion switching means combusts the fuel gas on only selected ones of the burner blocks, the burner block combustion switching means supplies only combustion air and stops supplying the fuel gas to the other burner blocks on which the combustion of the fuel gas is inactivated that are disposed outwardly of the selected ones of the burner blocks, thereby to cool the other burner blocks and nearby regions thereof.

Thus, only combustion air is supplied to the other burner blocks on which the combustion of the fuel gas is inactivated that are disposed outwardly of the selected ones of the burner blocks, so that the other burner blocks and their nearby regions can be cooled. Therefore, the heat from the burner blocks on which the fuel gas is being combusted is not transferred to the other burner blocks, preventing undue heating in a space around an object to be heated which is placed on the upper panel.

Preferred embodiments of the present invention seek to provide a gas heater which is capable of heating objects of different sizes with good thermal efficiency.

With the above arrangement, the number of burner blocks for burning the fuel gas thereon is changed by the effective heating area changing means depending on the bot tom area of an object to be heated which is placed on the upper panel above the combustion chamber. The effective heating area on the upper panel can thus be increased or reduced to heat the object with a good thermal efficiency.

The gas heater further includes an air supply passage, branch air supply pipes branched from the air supply passage and communicating with the burner blocks, respectively, wherein the air supply/discharge fan supplies combustion air to the burner blocks through the air supply passage and the branch air supply pipes, a branch air supply pipe opening/closing means for selectively opening and closing the branch air supply pipes which are connected to the burner blocks other than the burner block which is disposed in an innermost position, and bypass air supply pipes connected to the branch air supply pipes and communicating between regions upstream and downstream of the branch air supply pipe opening/closing means. The burner block combustion switching means opens the branch air supply passage opening/closing means disposed on the branch air supply pipes which communicate with the burner blocks on which the combustion of the fuel gas is being activated, and closes the branch air supply passage opening/closing means disposed on the branch air supply pipes which communicate with the burner blocks on which the combustion of the fuel gas is being inactivated.

Inasmuch as the burner block combustion switching means closes the branch air supply passage opening/closing means disposed on the branch air supply pipes which communicate with the burner blocks on which the combustion of the fuel gas is being inactivated, the burner blocks on which the combustion of the fuel gas is being inactivated are cooled by air supplied through the bypass air supply pipes. The flow rate of the cooling air supplied to those burner blocks can be selected as desired depending on the diameter of the bypass air supply pipes.

The fuel gas supply means supplies the fuel gas to the burner blocks respectively through nozzles disposed individually in the burner blocks.

With the above arrangement, the fuel gas supplied by the fuel gas supply means and the combustion air supplied by the air supply/discharge fan are mixed with each other in the burner blocks. Accordingly, it is not necessary for the air supply passage to incorporate a seal for preventing the fuel gas from leaking out, which would otherwise be required if the fuel gas and the combustion air were mixed with each other in the air supply passage communicating with the burner blocks. Therefore, the cost of the air supply passage can be lowered.

The fuel gas supply means comprises a gas supply pipe communicating with an air supply passage for introducing combustion air supplied from the air supply/discharge fan to the gas burner, a branch gas supply pipe communicating from the gas supply pipe with the air supply passage, opening adjusting means for adjusting the opening of the gas supply pipe, and branch gas supply pipe opening/closing means for selectively opening and closing the branch gas supply pipe. The flow rate of the fuel gas supplied to the gas burner is controlled by selectively opening and closing the branch gas supply pipe with the branch gas supply pipe opening/closing means and adjusting the opening of the gas supply pipe with the opening adjusting means.

With the fuel gas supply means thus arranged, after the flow rate of the fuel gas supplied to the burner has been adjusted by the branch gas supply pipe opening/closing means, the flow rate of the fuel gas supplied to the burner is finely adjusted by the opening adjusting means. The opening adjusting means may have a smaller range of opening for adjusting the opening of the gas supply pipe than the range of opening of an opening adjusting means which would be used as a sole means for adjusting the opening of the gas supply pipe. Consequently, it is not necessary to use a highly costly opening adjusting means having a wide range of opening.

For a better understanding of the present invention, and to show how the same may be carried into effect, reference will now be made, by way of example, to the accompanying drawings, in which:-
FIG. 1 is a perspective view of a gas heater according to an embodiment of the present invention;
FIG. 2(a) is a vertical cross-sectional view, partly in block form, showing a first example of a gas heater not directly embodying the present invention but useful for understanding the present invention;
FIG. 2(b) is a vertical cross-sectional view, partly in block for, showing a first example of a gas heater not directly embodying the present invention but useful for understanding the present invention;
FIG. 3(a) is a vertical cross-sectional view, partly in block form, of a gas heater according to a first embodiment of the present invention;
FIG. 3(b) is a vertical cross-sectional view, partly in block form, of a gas heater according to a second embodiment of the present invention;
FIG. 4(a) is a vertical cross-sectional view, partly in block form, of a gas heater according to a third embodiment of the present invention;
FIG. 4(b) is a vertical cross-sectional view, partly in block form, of a gas heater according to a fourth embodiment of the present invention;
FIG. 5(a) is a perspective view of a previously considered gas heater;
FIG. 5(b) is a vertical cross-sectional view, partly in block form, of the previously considered gas heater shown in FIG. 5(a); and
FIGS. 6(a) and 6(b) are vertical cross-sectional views illustrating the manner in which the previously considered gas heater is used.

Like or corresponding parts are denoted by like or corresponding reference characters throughout views.

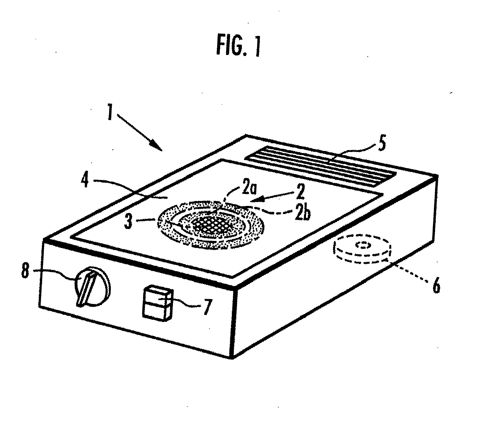

As shown in FIG. 1(a), a gas heater 1 has an annular surface-combustion burner 2 and an air-permeable porous body 3 which are disposed in a combustion chamber and a heat-resistant upper panel 4 of glass disposed above the combustion chamber. The burner 2 comprises an annular burner block 2a and an annular burner block 2b disposed around the annular burner block 2a. The gas heater 1 heats an object that is placed on the upper panel 4 without exposing flames.

The gas heater 1 also has an air supply/- discharge fan 6 for supplying combustion air to the burner 2 and delivering combustion exhaust gases from the burner 2 through the porous body 3 and an exhaust passage (not shown) into an exhaust slot 5, a capacity selector switch 7 for changing effective heating areas of the upper panel 4, and a combustion rate adjusting switch 8 for adjusting the combustion rate of the burner 2.

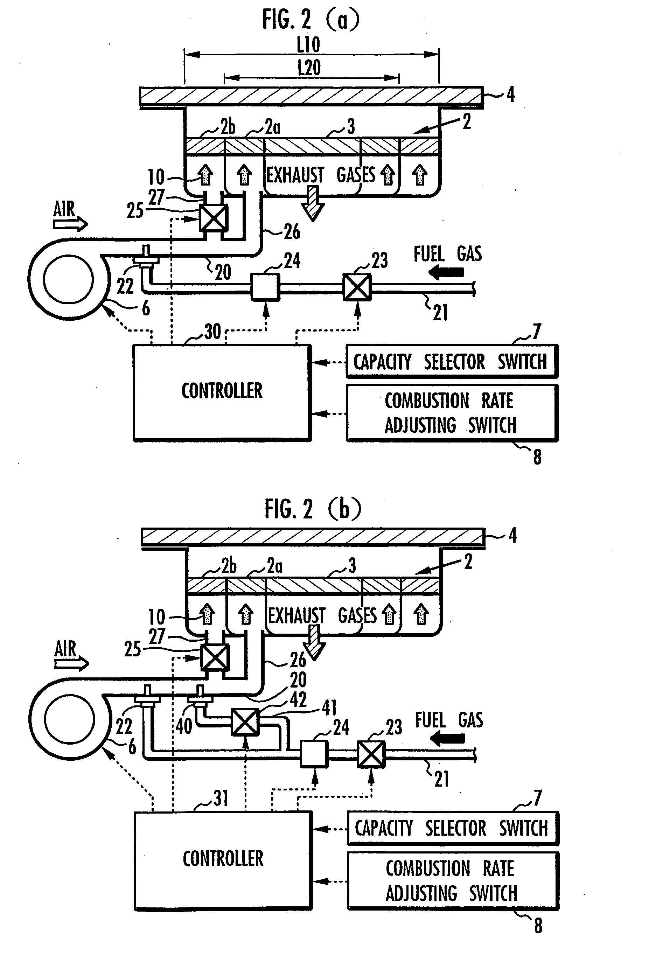

FIG. 2(a) shows in vertical cross section a first example of a gas heater not directly embodying the present invention but useful for understanding the present invention. As shown in FIG. 2(a), the burner 2 is supplied with combustion air from an air supply passage 20 and branch air supply passages 26, 27 branched from the air supply passage 20 by the air supply/discharge fan 6. A fuel gas supplied from a gas supply pipe 21 is injected into the air supply passage 20 from a nozzle 22 mounted on the end of the gas supply pipe 21 which is connected to the air supply passage 20. The gas supply pipe 21 and the nozzle 22 make up a fuel gas supply means.

The gas supply pipe 21 has a main gas valve 23 and a gas proportional valve 24 (serving as an opening adjusting means) which are successively disposed in the order named from its upstream end. The branch air supply passage 27 has a branch air supply pipe opening/closing valve or combustion area switching valve 25 (serving as a branch air supply pipe opening/closing means.

The gas heater 1 is controlled in operation by a controller 30 whose functions include a function as a burner block combustion switching means and a function as an effective heating area changing means.

The capacity selector switch 7 and the combustion rate adjusting switch 8 are connected to the controller 30. The controller 30 controls a combustion process carried out by the burner 2 depending on user's actions on the capacity selector switch 7 and the combustion rate adjusting switch 8. When the user shifts the capacity selector switch 7 to a "high capacity" position, the controller 30 opens both the main gas valve 23 and the branch air supply pipe opening/closing valve 25 to burn the fuel gas on both the burner blocks 2a, 2b.

Combustion exhaust gases produced by the burner blocks 2a, 2b are absorbed by the porous body 3, which is heated by the high-temperature combustion exhaust gases and discharges radiant heat. Therefore, the upper panel 4 provides an effective heating area which is substantially located within a circle having a diameter L10 that is covered by the combustion surfaces of the burner blocks 2a, 2b and the heat radiating surface of the porous body 3.

When the user shifts the capacity selector switch 7 to a "low capacity" position, the controller 30 opens the main gas valve 23 only and keeps the branch air supply pipe opening/closing valve 25 closed to burn the fuel gas on the burner block 2a only. As a result, the upper panel 4 provides an effective heating area which is substantially located within a circle having a diameter L20 that is covered by the combustion surface of the burner block 2a and the heat radiating surface of the porous body 3 which is heated by the combustion exhaust gases from the burner block 2a.

The cooker who uses the gas heater can select one of the above effective heating areas on the upper panel 4 depending on the size of a cooking utensil to be heated, e.g., a pan, by operating the capacity selector switch 7. Therefore, contents of the cooking utensil on the upper panel 4 can be heated with a good thermal efficiency, and a space around the cooling utensil is prevented from being unduly heated. Since no extra heat is radiated into the space around the cooling utensil, the cooker is not made uncomfortable and handles of the cooking utensil are prevented from being unduly heated while the cooking utensil is being heated by the gas heater.

Depending on the user's action on the capacity selector switch 7 and the combustion rate adjusting switch 8, the controller 30 sets a target combustion rate for the burner 2. Based on the target combustion rate thus set, the controller 30 adjusts the rotational speed of the air supply/discharge fan 6 to control the flow rate of combustion air supplied to the burner 2 and also adjusts the opening of the gas proportional valve 24 to control the flow rate of the fuel gas supplied to the burner 2. The gas burner according to the first example is advantageous as to its cost because only the combustion area switching valve 25 is required as a solenoid-operated valve for changing combustion areas.

A second example of a gas heater not directly embodying the present invention, but useful for understanding the present invention will be described below with reference to FIG. 2(b). Those parts of the gas heater shown in FIG. 2(b) which are identical to those of the gas heater shown in FIG. 2(a) are denoted by identical reference characters, and will not be described in detail below.

According to the second example, the gas heater has a nozzle 40 mounted on the end of a branch gas supply pipe 41 which is connected to the air supply passage 20. The branch gas supply pipe 41 has a branch gas supply pipe opening/closing valve 42 (serving as a branch gas supply pipe opening/closing means).

The gas supply pipe 21, the branch gas supply pipe 41, and the nozzles 22, 40 jointly make up a fuel gas supply means.

When the user shifts the capacity selector switch 7 to the "high capacity" position, a controller 31, whose functions include a function as a burner block combustion switching means and a function as an effective heating area changing means,
opens the main gas valve 23, the branch air supply pipe opening/closing valve 25, and the branch gas supply pipe opening/closing valve 42 to burn the fuel gas on both the burner blocks 2a, 2b. When the user shifts the capacity selector switch 7 to the "low capacity" position, the controller 31 opens the main gas valve 23 only and keeps the branch air supply pipe opening/closing valve 25 and the branch gas supply pipe opening/closing valve 42 closed to burn the fuel gas on the burner block 2a only.

With the branch gas supply pipe opening/closing valve 42, after the flow rate of the fuel gas supplied to the burner 2 is changed to different rates when the fuel gas is to be combusted on both the burner blocks 2a, 2b and when the fuel gas is to be combusted on the burner block 2a only, the gas proportional valve 24 is operated to finely adjust the flow rate of the fuel gas supplied to the burner 2.

The range of opening of the gas proportional valve 24 in the gas heater according to the second example
may be smaller than the range of opening of the gas proportional valve 24 in the gas heater according to the first embodiment. It is thus not necessary to use a highly costly gas proportional valve having a wide range of opening.

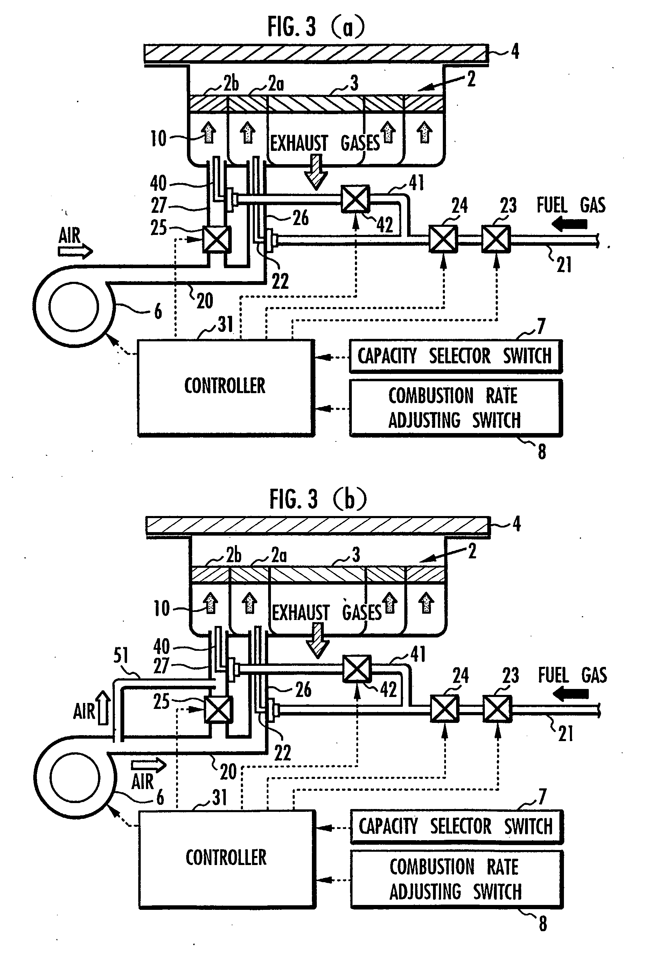

A gas heater according to a first embodiment of the present invention will be described below with reference to FIG. 3(a). Those parts of the gas heater shown in FIG. 3(a) which are identical to those of the gas heater shown in FIGS. 2(a), 2(b) are denoted by identical reference characters, and will not be described in detail below.

According to the first embodiment, the nozzle 40 is mounted on the branch air supply passage 27 and disposed downstream of the branch air supply pipe opening/closing valve 25, and has an injection port extending into the burner 2. Similarly, the nozzle 22 has an injection port extending through the branch air supply passage 26 into the burner 2.

Since the ejection ports of the nozzles 22, 40 are located within the burner 2, the combustion air and the fuel gas are mixed with each other within the burner 2, and only the combustion air flows in the air supply passage 20 from the air supply/discharge fan 6 to the burner 2. Accordingly, it is not necessary for the air supply passage 20 to incorporate a highly costly seal for preventing the fuel gas from leaking out. Therefore, the cost of the air supply passage 20 can be lowered.

A gas heater according to a second embodiment of the present invention will be described below with reference to FIG. 3(b). Those parts of the gas heater shown in FIG. 3(b) which are identical to those of the gas heater shown in FIGS. 2(a), 2(b), 3(a) are denoted by identical reference characters, and will not be described in detail below.

According to the second embodiment, a bypass air supply pipe 51 is provided for introducing the combustion air supplied from the air supply/discharge fan 6 into the branch air supply passage 27 downstream of the branch air supply pipe opening/closing valve 25. When the branch air supply pipe opening/closing valve 25 is closed and the fuel gas is combusted on the burner block 2a only, air is supplied through the bypass pipe 51 to the burner block 2b.

The air supplied from the surface of the burner block 2b to the combustion chamber cools the burner block 2b and its nearby regions. Therefore, the portion of the upper panel 4 which confronts the burner block 2b is prevented from being heated by the heat conducted from the burner block 2a, and hence the space around the object on the upper panel 4 which is being heated by the gas heater is prevented from being unduly heated.

The bypass air supply pipe 51 may have a diameter which is set to an appropriate value in view of the cooling effected achieved near the burner block 2b and the combustion efficiency of the burner block 2a.

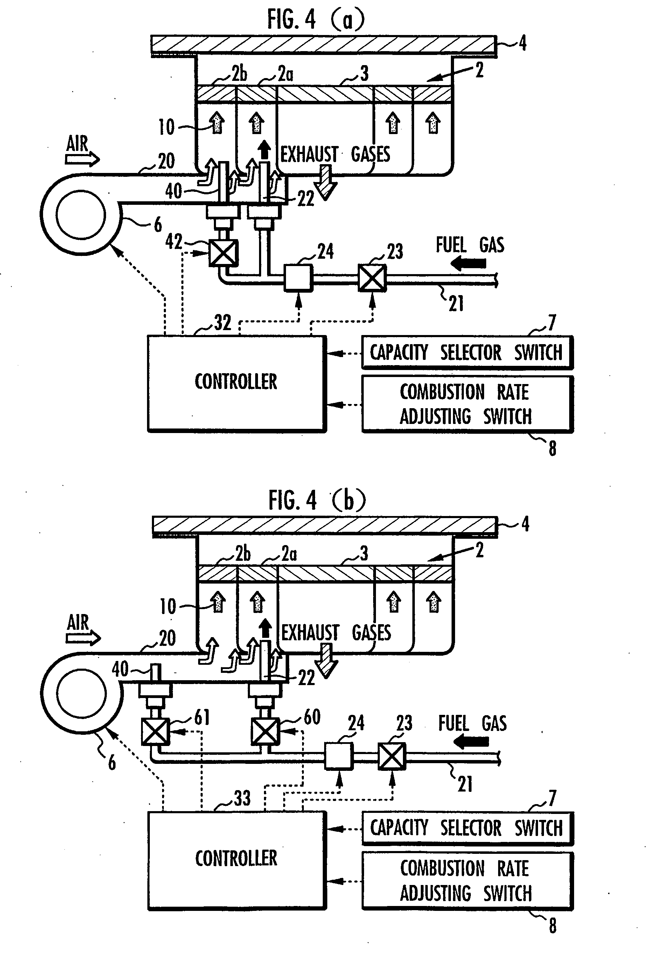

A gas heater according to a third embodiment of the present invention will be described below with reference to FIG. 4(a). Those parts of the gas heater shown in FIG. 4(a) which are identical to those of the gas heater shown in FIGS. 2(a), 2(b), 3(a) are denoted by identical reference characters, and will not be described in detail below.

According to the third embodiment, the combustion area switching valve 25 in the first through fourth embodiments is dispensed with, and the ejection ports of the nozzles 22, 40 are located within the burner 2 as with the first and second embodiments.

When the user shifts the capacity selector switch 7 to the "high capacity" position, a controller 32, whose functions include a function as a burner block combustion switching means and a function as an effective heating area changing means according to the present invention, opens the main gas valve 23 and the branch gas supply pipe opening/closing valve 42 to burn the fuel gas on both the burner blocks 2a, 2b. When the user shifts the capacity selector switch 7 to the "low capacity" position, the controller 32 opens the main gas valve 23 only and keeps the branch gas supply pipe opening/closing valve 42 closed to burn the fuel gas on the burner block 2a only.

With the capacity selector switch 7 shifted to the "low capacity" position, the fuel gas is combusted on the burner block 2a only, and only air is supplied to the burner block 2b on which no fuel gas is being combusted. Consequently, the burner block 2b and its nearby regions are cooled by the air supplied from the surface of the burner block 2b to the combustion chamber, without the need for the bypass pipe 51 according to the second embodiment.

A gas heater according to a fourth embodiment of the present invention will be described below with reference to FIG. 4(b). Those parts of the gas heater shown in FIG. 4(b) which are identical to those of the gas heater shown in FIGS. 2(a), 2(b), 3(a) are denoted by identical reference characters, and will not be described in detail below.

According to the fourth embodiment, the nozzle 40 is disposed in a region between the air supply passage 20 and the burner 20 for supplying the fuel gas injected therefrom to both the burner block 2a and the burner block 2b. A first branch gas supply pipe opening/closing valve 60 and a second branch gas supply pipe opening/closing valve 61 are provided for adjusting the flow rate of the fuel gas supplied from the gas supply passage 121.

When the user shifts the capacity selector switch 7 to the "high capacity" position, a controller 33 opens the main gas valve 23 and the second branch gas supply pipe opening/closing valve 61 and keeps the first branch gas supply pipe opening/closing valve 60 closed. The fuel gas is supplied to both the burner block 2a and the burner block 2b and combusted on both the burner block 2a and the burner block 2b.

When the user shifts the capacity selector switch 7 to the "low capacity" position, a controller 33 opens the main gas valve 23 and the first branch gas supply pipe opening/closing valve 60 and keeps the second branch gas supply pipe opening/closing valve 61 closed. The fuel gas is supplied to the burner block 2a only and combusted thereon, and only air is supplied to the burner block 2b on which no fuel gas is being combusted. Therefore, as with the third embodiment, the burner block 2b and its nearby regions are cooled by the air supplied from the surface of the burner block 2b to the combustion chamber.

Phenomena that occur when the burner block 2a is clogged with dust and dirt particles in the third and fourth embodiments are compared with each other as described below. In the fourth embodiment, when the burner block 2a is clogged with dust and dirt particles, if the fuel gas is combusted on the burner block 2a and the burner block 2b with the second branch gas supply pipe opening/closing valve 61 being opened and the first branch gas supply pipe opening/closing valve 60 being closed, the mixture of the fuel gas and the air tends to flow to the burner block 2b. Therefore, the flow rate of the mixture supplied to the burner block 2a is reduced and hence the amount of combustion on the burner block 2a is reduced, tending to bring the amounts of combustion on the burner blocks 2a, 2b out of balance with each other.

In the third embodiment, the nozzles 22, 40 are associated exclusively with the burner block 2a and the burner block 2b, respectively. Therefore, even when the burner block 2a is clogged with dust and dirt particles, any reduction in the flow rate of the fuel gas supplied from the nozzle 22 to the burner block 2a is so small that the amounts of combustion on the burner blocks 2a, 2b are less liable to be brought out of balance with each other.

In the illustrated embodiments, the gas heater 1 has the burner 2 constructed of the two annular burner blocks 2a, 2b having different diameters which are disposed around the porous body 3. However, the principles of the present invention are also applicable to a gas heater having a burner constructed of three or more annular burner blocks having different diameters which are disposed around a porous body, the diameters of the annular burner blocks being progressively smaller toward the porous body.

According to the above modification, the number of burner blocks to burn the fuel gas thereon is progressively increased from the innermost burner block toward the outermost burner block for progressively increasing the effective heating area on the upper panel 4. Alternatively, the number of burner blocks to burn the fuel gas thereon is progressively reduced from the outermost burner block toward the innermost burner block for progressively reducing the effective heating area on the upper panel 4.

In the illustrated embodiment, the burner 2 is comprised of the annular burner blocks 2a, 2b. However, the burner blocks are not limited to the annular shape, but may be of any shape insofar as they are endless and allow a porous body to be disposed therein.

Although certain preferred embodiments of the present invention have been shown and described in detail, it should be understood that various changes and modifications may be made therein without departing from the scope of the appended claims.

## Claims

1. A gas heater (1) comprising:
a combustion chamber with an upper panel (4) disposed thereabove for placing an object to be heated thereon;
a surface-combustion burner (2) disposed in said combustion chamber in confronting relation to the upper panel (4);
fuel gas supply means (21; 22) for supplying a fuel gas to the burner;
an exhaust passage having an end communicating with the combustion chamber through an air-permeable porous body (3) disposed in the combustion chamber and an opposite end communicating with an exhaust slot (5);
an air supply/discharge fan (6) for supplying combustion air to the burner and delivering combustion exhaust gases from the burner (2) through the porous body (3) and the exhaust passage to the exhaust slot (5);
said burner (2) comprising a plurality of endless burner blocks (2a, 2b) of different sizes disposed around said porous body (3), said sizes of the endless burner blocks being progressively smaller toward said porous body;
burner block combustion switching means (30) for selectively activating and inactivating a combustion of the fuel gas individually on said burner blocks; (2a,2b) and
effective heating area changing means (7) for increasing an effective heating area on said upper panel (4) by progressively increasing the number of burner blocks (2a,2b) to combust the fuel gas thereon outwardly from an innermost one of the burner blocks (2a), and reducing the effective heating area on said upper panel (4) by progressively reducing the number of burner blocks (2a, 2b) to combust the fuel gas thereon inwardly toward the innermost one of the burner blocks (2a), wherein said burner block combustion switching means (30) comprises means for combusting the fuel gas on only selected ones of said burner blocks (2a, 2b), and supplying only combustion air and stopping supplying the fuel gas to the other burner blocks on which the combustion of the fuel gas is inactivated that are disposed outwardly of said selected ones of the burner blocks, thereby to cool the other burner blocks and nearby regions thereof.

2. A gas heater according to claim 1, further comprising:
an air supply passage (20);
branch air supply pipes (26, 27) branched from said air supply passage and communicating with said burner blocks, respectively, wherein said air supply/discharge fan (6) supplies combustion air to said burner blocks through said air supply passage (20) and said branch air supply pipes;
branch air supply pipe opening/closing means (25) for selectively opening and closing the branch air supply pipes which are connected to the burner blocks other than the burner block which is disposed in an innermost position; and
bypass air supply pipes (51) connected to said branch air supply pipes (20) and communicating between regions upstream and downstream of said branch air supply pipe opening/closing means (25);
said burner block combustion switching means comprising means for opening the branch air supply passage opening/closing means disposed on the branch air supply pipes which communicate with the burner blocks on which the combustion of the fuel gas is being activated, and closing the branch air supply passage opening/closing means (25) disposed on the branch air supply pipes which communicate with the burner blocks on which the combustion of the fuel gas is being inactivated.

3. A gas heater according to claim 1 or 2, wherein said fuel gas supply means comprises means for supplying the fuel gas to said burner blocks respectively through nozzles (22, 40) disposed individually in said burner blocks.

## Patentansprüche

1. Gasheizgerät (1), umfassend:
eine Brennkammer, über der eine obere Platte (4) angeordnet ist, auf die man ein Objekt setzen kann, das erwärmt werden soll;
einen Oberflächenbrenner (2), der in der Brennkammer gegenüber der oberen Platte (4) angeordnet ist;
eine Brenngas-Zuführvorrichtung (21; 22), die dem Brenner ein Brenngas zuführt;
einen Abgabedurchgang, dessen eines Ende mit der Brennkammer über einen luftdurchlässigen porösen Körper (3) verbunden ist, der in der Brennkammer untergebracht ist, und dessen entgegengesetztes Ende mit einem Auslassschlitz (5) verbunden ist;
ein Luftzufuhr- und Abfuhrgebläse (6), das dem Brenner Verbrennungsluft zuführt und die Verbrennungsabgase von dem Brenner (2) durch den porösen Körper (3) und den Abgabedurchgang zum Auslassschlitz (5) führt,
wobei der Brenner (2) eine Anzahl durchgehender Brennerblöcke (2a, 2b) mit unterschiedlichen Größen umfasst, die um den porösen Körper (3) herum angeordnet sind, und die Größen der durchgehenden Brennerblöcke hin zum porösen Körper zunehmend geringer werden;
eine Brennerblock-Verbrennungsumschaltvorrichtung (30) zum gezielten in Gang setzen und Stilllegen der Verbrennung des Brenngases jeweils einzeln für die Brennerblöcke (2a, 2b); und
eine Veränderungsvorrichtung (7) für die effektive Heizfläche, die eine effektive Heizfläche auf der oberen Platte (4) vergrößert, indem sie progressiv die Anzahl der Brennerblöcke (2a, 2b) erhöht, damit das Brenngas auf ihnen verbrennt, und zwar von einem innersten Brennerblock (2a) nach außen, und die die effektive Heizfläche auf der oberen Platte (4) verringert, indem sie progressiv die Anzahl der Brennerblöcke (2a, 2b) erniedrigt, auf denen das Brenngas verbrennt, und zwar nach innen hin zum innersten Brennerblock (2a), wobei die Brennerblock-Verbrennungsumschaltvorrichtung (30) Mittel enthält, damit das Brenngas nur auf ausgewählten Brennerblöcken (2a, 2b) verbrennt, und den anderen Brennerblöcken, auf denen das Verbrennen von Brenngas eingestellt ist, und die außerhalb der ausgewählten Brennerblöcke angeordnet sind, nur Verbrennungsluft zugeführt und die Zufuhr von Brenngas beendet wird, damit die anderen Brennerblöcke und benachbarte Bereiche gekühlt werden.

2. Gasheizgerät nach Anspruch 1, zudem umfassend:
einen Luftzufuhrdurchlass (20);
Verzweigungs-Luftzufuhrleitungen (26, 27), die von dem Luftzufuhrdurchlass abzweigen und jeweils mit den Brennerblöcken verbunden sind, wobei das Luftzufuhr- und Abfuhrgebläse (6) den Brennerblöcken über den Luftzufuhrdurchlass (20) und die Verzweigungs-Luftzufuhrleitungen Verbrennungsluft zuführt;
eine Öffnungs/Schließvorrichtung (25) für die Verzweigungs-Luftzufuhrleitung, die gezielt die Verzweigungs-Luftzufuhrleitungen öffnet bzw. schließt, die mit den Brennerblöcken mit Ausnahme desjenigen Brennerblocks verbunden sind, der an der innersten Position angeordnet ist; und
Umgehungs-Luftzufuhrleitungen (51), die an die Verzweigungs-Luftzufuhrleitungen (20) angeschlossen sind und eine Verbindung herstellen zwischen Bereichen stromaufwärts und stromabwärts der Öffnungs/Schließvorrichtung (25) für die Verzweigungs-Luftzufuhrleitung,
wobei die Brennerblock-Verbrennungsumschaltvorrichtung Mittel zum Öffnen der Öffnungs/Schließvorrichtungen für den Verzweigungs-Luftzufuhrdurchgang enthält, die an den Verzweigungs-Luftzufuhrleitungen angeordnet sind, die mit den Brennerblöcken verbunden sind, an denen das Verbrennen des Brenngases in Gang gesetzt wird, und zum Schließen der Öffnungs/Schließvorrichtungen (25) für den Verzweigungs-Luftzufuhrdurchgang, die an den Verzweigungs-Luftzufuhrleitungen angeordnet sind, die mit den Brennerblöcken verbunden sind, an denen das Verbrennen des Brenngases eingestellt wird.

3. Gasheizgerät nach Anspruch 1 oder 2, worin die Brenngas-Zufuhrvorrichtung Mittel umfasst, die den Brennerblöcken das Brenngas jeweils über Düsen (22, 40) zuführen, die einzeln in den Brennerblöcken angeordnet sind.

## Revendications

1. Élément chauffant à gaz (1), comprenant :
- une chambre de combustion avec un panneau supérieur (4) disposé au-dessus de celle-ci pour placer sur celui-ci un objet devant être chauffé ;
- un brûleur à combustion de surface (2), disposé dans ladite chambre de combustion en relation de confrontation avec le panneau supérieur (4) ;
- des moyens d'alimentation en gaz combustible (21 ; 22) pour délivrer un gaz combustible au brûleur ;
- un passage d'évacuation ayant une extrémité communiquant avec la chambre de combustion à travers un corps poreux perméable à l'air (3) disposé dans la chambre de combustion et une extrémité opposée communiquant avec une fente d'évacuation (5) ;
- une soufflante d'alimentation/évacuation d'air (6) pour alimenter en air de combustion le brûleur et délivrer les gaz d'évacuation de combustion depuis le brûleur (2) par l'intermédiaire du corps poreux (3) et du passage d'évacuation à la fente d'évacuation (5) ;
- ledit brûleur (2) comprenant une pluralité de blocs de brûleur sans fin (2a, 2b) de différentes tailles, disposés autour dudit corps poreux (3), lesdites tailles des blocs de brûleur sans fin étant progressivement de plus en plus petites vers ledit corps poreux ;
- des moyens de commutation de combustion de blocs de brûleur (30) pour activer et désactiver de manière sélective une combustion du gaz combustible individuellement sur lesdits blocs de brûleur (2a, 2b) ; et
- des moyens de changement de surface de chauffe effective (7) pour accroître une surface de chauffe effective sur ledit panneau supérieur (4), en augmentant progressivement le nombre de blocs de brûleur (2a, 2b) pour brûler le gaz combustible sur ceux-ci vers l'extérieur depuis un bloc de brûleur (2a) le plus intérieur, et réduire la surface de chauffe effective sur ledit panneau supérieur (4), en réduisant progressivement le nombre de blocs de brûleur (2a, 2b) pour brûler le gaz combustible sur ceux-ci vers l'intérieur vers le bloc de brûleur (2a) le plus intérieur, lesdits moyens de commutation de combustion de blocs de brûleur (30) comprenant des moyens pour brûler le gaz combustible sur seulement des blocs de brûleur sélectionnés parmi lesdits blocs de brûleur (2a, 2b), délivrer seulement de l'air de combustion et cesser d'alimenter en gaz combustible les autres blocs de brûleur, sur lesquels la combustion du gaz combustible est désactivée, qui sont disposés vers l'extérieur desdits blocs de brûleur sélectionnés, afin de refroidir ainsi les autres blocs de brûleur et les régions voisines de ceux-ci.

2. Élément chauffant à gaz selon la revendication 1, comprenant en outre :
- un passage d'alimentation en air (20) ;
- des tubulures d'alimentation en air (26, 27) se ramifiant depuis ledit passage d'alimentation en air et communiquant avec lesdits blocs de brûleur, respectivement, ladite soufflante d'alimentation/évacuation d'air (6) alimentant en air de combustion lesdits blocs de brûleur par l'intermédiaire dudit passage d'alimentation en air (20) et desdites tubulures d'alimentation en air ;
- des moyens d'ouverture/fermeture des tubulures d'alimentation en air (25) pour ouvrir et fermer de manière sélective les tubulures d'alimentation en air connectées aux blocs de brûleur autres que le bloc de brûleur disposé à la position la plus intérieure ; et
- des tuyaux de dérivation d'alimentation en air (51), connectés audites tubulures d'alimentation en air (26, 27) et assurant une communication entre des régions amont et aval desdits moyens d'ouverture/fermeture des tubulures d'alimentation en air (25) ;
- lesdits moyens de commutation de combustion de blocs de brûleur comprenant des moyens pour ouvrir les moyens d'ouverture/fenneture des tubulures de passage d'alimentation en air, disposés sur les tubulures d'alimentation en air qui communiquent avec les blocs de brûleur sur lesquels la combustion du gaz combustible est activée, et fermer les moyens d'ouverture/fermeture des tubulures de passage d'alimentation en air (25), disposés sur les tubulures d'alimentation en air qui communiquent avec les blocs de brûleur sur lesquels la combustion du gaz combustible est désactivée.

3. Élément chauffant à gaz selon la revendication 1 ou 2, dans lequel lesdits moyens d'alimentation en gaz combustible comprennent des moyens pour alimenter en gaz combustible lesdits blocs de brûleur respectivement par des buses (22, 40) disposées individuellement dans lesdits blocs de brûleur.
